# EUROPEAN PATENT SPECIFICATION

(11) **EP 2 665 761 B1**
(45) Date of publication and mention of the grant of the patent: **08.04.2015**
(21) Application number: 12702911.4
(22) Date of filing: 04.01.2012
(51) Int. Cl.: C08G 59/00, C08G 59/06, C08G 59/40

(54) **HIGH PERFORMANCE THERMOSET USEFUL FOR ELECTRICAL LAMINATE, HIGH DENSITY INTERCONNECT AND INTERCONNECT SUBSTRATE APPLICATIONS**
HOCHLEISTUNGSDUROPLAST FÜR EIN ELEKTRISCHES LAMINAT, HOCHDICHTE VERNETZUNG DAFÜR UND VERNETZUNGSSUBSTRATANWENDUNGEN
MATIÈRE PLASTIQUE THERMODURCISSABLE À HAUTE PERFORMANCE UTILE POUR UN STRATIFIÉ ÉLECTRIQUE, INTERCONNECTEUR À HAUTE DENSITÉ ET APPLICATIONS DE SUBSTRAT INTERCONNECTEUR

(30) Priority: 21.01.2011 US 201161434881 P
(43) Date of publication of application: 27.11.2013
(73) Proprietor: Dow Global Technologies LLC, Midland, MI 48674 (US)
(72) Inventor: WILSON, Mark B., Clute TX 77531 (US); HEARN, Robert L., Lake Jackson TX 77566 (US)
(74) Representative: Beck Greener
(86) International application number: PCT/US2012/020129
(87) International publication number: WO 2012/099713

(56) References cited:
- WO-A1-01/42359
- WO-A1-2009/114383
- WO-A1-2010/075006
- KAWAGUCHI S ET AL: "Tetra:functional epoxy cpds. - curable to form heat resistant prods", WPI / THOMSON,, vol. 1983, no. 51, 12 November 1983 (1983-11-12), XP002527054,

## Description

### Reference to Related Applications

This application is a non-provisional application claiming priority from the U.S. Provisional Patent Application No. 61/434,881, filed on January 21, 2011, entitled "HIGH PERFORMANCE THERMOSET USEFUL FOR ELECTRICAL LAMINATE, HIGH DENSITY INTERCONNECT AND INTERCONNECT SUBSTRATE APPLICATIONS" the teachings of which are incorporated by reference herein, as if reproduced in full hereinbelow.

### Field of the Invention

The present invention relates generally to polyphenolic compounds and epoxy resins which comprise cycloaliphatic moieties, to processes for the production thereof, and to thermoset products which are made from these resins.

### Background of the Invention

Synthetic resins are widely used in both industrial and consumer electronics because of, among other things, their chemical resistance, mechanical strength and electrical properties. For example, synthetic resins can be used in electronics as protective films, adhesive materials and/or insulating materials, such as interlayer insulating films. To be useful for these applications, the synthetic resins need to provide ease of handling and certain necessary physical, thermal, electrical insulation and moisture resistance properties. For example, synthetic resins having a low dielectric constant, a high solubility and a low moisture uptake as well as a high glass transition temperature (Tg) can be desirable combination of properties for electrical applications.

The use of synthetic resins in electronic applications can also influence the electrical signals generated in the electronics. Increases in electrical signal frequency in an electronic system (e.g., a computer system) allows for data to be processed at a higher rate. Synthetic resins in the vicinity of such electrical signals, however, can exert a large influence on transmission loss of such electrical signals in a high frequency circuit. To minimize this influence, synthetic resins having a low dielectric constant and a low dissipation factor, in addition to the other properties discussed above, are desired.

### SUMMARY OF THE INVENTION

In an embodiment of the invention, there is disclosed,

A composition comprising:
a) tetraphenolic epoxy resin comprising the tetraglycidyl ether of cyclohexanedimethyltetraphenol or the tetraglycidylether of dicyclopentadienedimethyltetraphenol;
b) a maleimide comprising toluenebismaleimide, phenylmaleimide, 4,4'-bismaleimidodiphenylmethane or combinations thereof; and
c) 10 to 50 wt.% of a triazine and/or a cyanate ester, in terms of the weight of cyanate monomer vs. the weight of the other organic components excluding solvent, wherein said triazine and/or cyanate ester comprises triazine cyanate ester.

In an embodiment, the tetraphenolic epoxy resin is the tetraglycidyl ether of cyclohexanedimethyltetraphenol (eCHTP), a multifunctional phenolic resin.

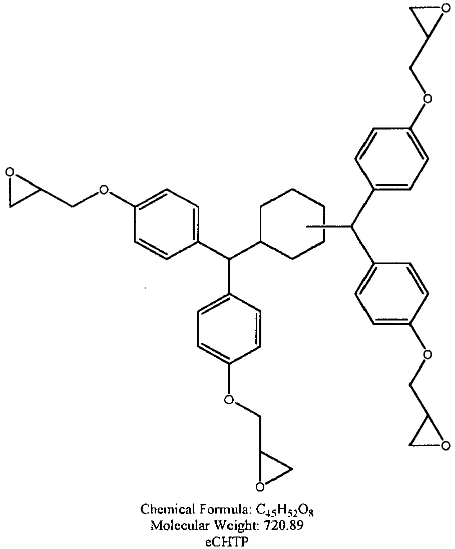

Also in an embodiment, the tetraglycidylether of dicyclopentadienedimethyltetraphenol (eDCPD-TP) may be used.

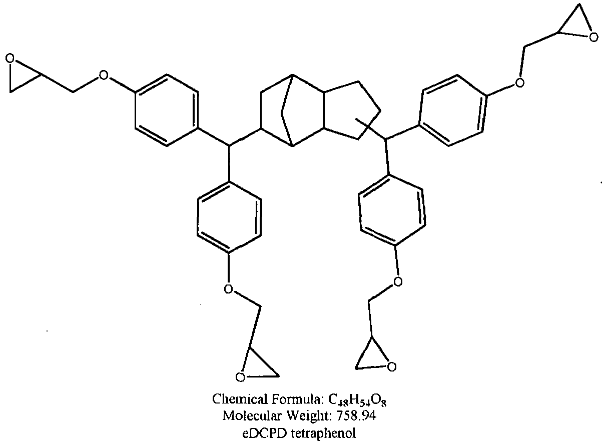

In an embodiment, the tetraphenolic epoxy resin is present in an amount in the range of from about 5 weight percent to about 95 weight percent, based on the total weight of the composition. In an embodiment, the epoxy resin is present in an amount in the range of from about 35 weight percent to about 65 weight percent, based on the total weight of the composition. Ranges outside of these would result in significantly decreased performance.

### Maleimide

In various embodiments, the composition of the present disclosure further includes a maleimide resin. Examples of suitable maleimide resins include toluenebismaleimide, phenylmaleimide, 4,4'-bismaleimidodiphenylmethane and combinations thereof.

In an embodiment, the range of maleimide concentration (expressed as the weight of the maleimide-containing monomer vs the weight of the other organic components excluding solvent) is from about 0 weight percent to about 50 weight percent. In another embodiment, the range is from about 10 weight percent to about 40 weight percent, and in yet another embodiment, from 10 weight percent to 30 weight percent. Ranges outside of these would result in significantly decreased performance.

### Triazine/Cyanate Ester

For the various embodiments, the composition of the present disclosure also includes a cyanate ester. Examples of suitable cyanate esters include a partially trimerized cyanate ester, and a triazine cyanate ester (e.g., cyanate ester partially trimerized into a triazine ring structure). Specific examples of suitable cyanate esters are the dicyanates (or polycyanates) of the following bisphenols and polyphenols: bisphenol A, bisphenol F (4,4'-bis(hydroxyphenyl)methane, bisphenol S (4,4'-bis(hydroxyphenyl)sulfone, dicyclopentadiene bisphenol, naphthalene diol, 4,4'-dihydroxybiphenyl, 4,4'-dihydroxy-3,3',5,5'-tetramethylbiphenyl, phenol novolac, cresol novolac, naphthol novolac, and combinations thereof. For the various embodiments, the partially trimerized cyanate ester and/or the triazine cyanate ester are soluble in the aprotic solvent (e.g., ketones such as methyl ethyl ketone, methyl isobutyl ketone and combinations thereof) used with the phosphorous-containing compound of the composition. Commercially available cyanates include Primaset^{®} BA-200, Primaset^{®} BA-230s, Primaset^{®} PT-30, Primaset^{®} PT-30s, Primaset^{®} LECY, Primaset^{®} PT-60, and Primaset^{®} PT-60s all available from Lonza Ltd. Basel, Switzerland.

The range of cyanate concentration (expressed as the weight of the cyanate monomer vs the weight of the other organic components excluding solvent) is 10 wt% to 50 wt%, and preferred 15 wt% to 40 wt%. Ranges outside of these would result in significantly decreased performance.

### Catalyst

Optionally, catalysts can be added to the compositions described above. Catalysts can include, but are not limited to, imidazole compounds including compounds having one imidazole ring per molecule, such as imidazole, 2-methylimidazole, 2-ethyl-4-methylimidazole, 2-undecylimidazole, 2-heptadecylimidazole, 2-phenylimidazole, 2-phenyl-4-methylimidazole, 1-benzyl-2-methylimidazole, 2-ethylimidazole, 2-isopropylimidazole, 2-phenyl-4-benzylimidazole, 1-cyanoethyl-2-methylimidazole, 1-cyanoethyl-2-ethyl-4-methylimidazole, 1-cyanoethyl-2-undecylimidazole, 1-cyanoethyl-2-isopropylimidazole, 1-cyanoethyl-2-phenylimidazole, 2,4-diamino-6-[2'-methylimidazolyl-(1)']-ethyl-s-triazine, 2,4-diamino-6-[2'-ethyl-4-methylimidazolyl-(1)']-ethyl-s-triazine, 2,4-diamino-6-[2'-undecylimidazolyl-(1)']-ethyl-s-triazine, 2-methyl-imidazo-lium-isocyanuric acid adduct, 2-phenylimidazolium-isocyanuric acid adduct, 1-aminoethyl-2-methylimidazole, 2-phenyl-4,5-dihydroxymethylimidazole, 2-phenyl-4-methyl-5-hydroxymethylimidazole, 2-phenyl-4-benzyl-5-hydroxymethylimidazole and the like; and compounds containing 2 or more imidazole rings per molecule which are obtained by dehydrating above-named hydroxymethyl-containing imidazole compounds such as 2-phenyl-4,5-dihydroxymethylimidazole, 2-phenyl-4-methyl-5-hydroxymethylimidazole and 2-phenyl-4-benzyl-5-hydroxy-methylimidazole; and condensing them with formaldehyde, e.g., 4,4'-methylene-bis-(2-ethyl-5-methylimidazole), and the like. The composition can also contain metal catalysts conventionally used to cure cyanates: zinc naphthenate, zinc octoate, zinc ethylhexoate, zinc hexoate, as well as the manganese, copper, and other transition element (Groups 4-13) of these same anions.

### Halogenated Flame retardant

The halogenated flame retardant, may include brominated flame retardants. Specific examples of brominated additives include brominated polyphenols such as tetrabromobisphenol A (TBBA) and tetrabromobisphenol F and materials derived therefrom: TBBA-diglycidyl ether, reaction products of bisphenol A or TBBA with TBBA-diglycidyl ether, and reaction products of bisphenol A diglycidyl ether with TBBA. Mixtures of one or more of the above described flame retardant additives can also be used.

### Nonhalogenated Flame Retardant

The composition also contains a non-halogen flame retardant. In an embodiment, the non-halogen flame retardant can be a phosphorus-containing compound. The phosphorus-containing compound can contain some reactive groups such as a phenolic group, an acid group, an amino group, an acid anhydride group, a phosphate group, or a phosphinate group which can react with the epoxy resin or hardener of the composition.

The phosphorus-containing compound can contain on average one or more than one functionality capable of reacting with epoxy groups. Such phosphorus-containing compound generally contains on average 0.8 to 5 functionalities. In an embodiment, the phosphorus-containing compound contains in the range of from 0.9 to 4 functionalities, and in another embodiment, it contains in the range of 1 to 3 functionalities capable of reacting with an epoxy resin.

The phosphorus-containing compound useful in the present invention include for example one or more of the following compounds: P-H functional compounds such as for example HCA, dimethylphosphite, diphenylphosphite, ethylphosphonic acid, diethylphosphinic acid, methyl ethylphosphinic acid, phenyl phosphonic acid, vinyl phosphonic acid, phenolic (HCA-HQ); tris(4-hydroxyphenyl)phosphine oxide, bis(2-hydroxyphenyl)phenylphosphine oxide, bis(2-hydroxyphenyl)phenylphosphinate, tris(2-hydroxy-5-methylphenyl)phosphine oxide, acid anhydride compounds such as M-acid-AH, and amino functional compounds such as for example bis(4-aminophenyl)phenylphosphate, and mixtures thereof. Other suitable compounds are described in EP1268665, herein incorporated by reference.

In an embodiment, a phosphonate compound can be used. Phosphonates that also contain groups capable of reacting with the epoxy resin or the hardener such as polyglycidyl ethers or polyphenols with covalently-bound tricyclic phosphonates are useful. Examples include but are not limited to the various materials derived from DOP (9,10-dihydro-9-oxa-10-phosphaphenanthrene 10-oxide) such as DOP-hydroquinone (10-(2',5'-dihydroxyphenyl)-9,10-dihydro-9-oxa-10-phosphaphenanthrene 10-oxide), condensation products of DOP with glycidylether derivatives of novolacs, and inorganic flame retardants such as aluminum trihydrate, aluminum hydroxide (Boehmite) and aluminum phosphinite. If inorganic flame retardant fillers are used, silane treated grades are preferred.

Mixtures of one or more of the above described flame retardancy enhancing compounds may also be used.

Embodiments of the present disclosure can also include the use of at least one maleimide resin with the thermosetting monomers of the present disclosure. Examples of suitable maleimide resins include, but are not limited to, those having two maleimide groups derived from maleic anhydride and diamines or polyamines. Suitable maleimide resins include bismaleimides such as 4,4'-diaminodiphenylmethane, among others.

Embodiments of the present disclosure also provide for a composition that includes the thermosetting monomer of the present disclosure and at least one thermoplastic polymer. Typical thermoplastic polymers include, but are not limited to, polymers produced from vinyl aromatic monomers and hydrogenated versions thereof, including both diene and aromatic hydrogenated versions, including aromatic hydrogenation, such as styrene-butadiene block copolymers, polystyrene (including high impact polystyrene), acrylonitrile-butadiene-styrene (ABS) copolymers, and styrene-acrylonitrile copolymers (SAN); polycarbonate (PC), ABS/PC compositions, polyethylene, polyethylene terephthalate, polypropylene, polyphenylenoxides (PPO), hydroxy phenoxy ether polymers (PHE), ethylene vinyl alcohol copolymers, ethylene acrylic acid copolymers, polyolefin carbon monoxide interpolymers, chlorinated polyethylene, polyphenylene ether, polyolefins, olefin copolymers, cyclic olefin copolymers, and combinations or blends thereof.

In an additional embodiment, the composition of the present disclosure can include the thermosetting monomer of the present disclosure and at least one reactive and/or non-reactive thermoplastic resin. Examples of such thermoplastic resins include, but are not limited to, polyphenylsulfones, polysulfones, polyethersulfones, polyvinylidene fluoride, polyetherimide, polypthalimide, polybenzimidiazole, acyrlics, phenoxy, and combinations or blends thereof.

For the various embodiments, the thermosetting monomer of the present disclosure can be blended with the thermoplastic resin to form a hybrid crosslink network. Preparation of the compositions of the present disclosure can be accomplished by suitable mixing means known in the art, including dry blending the individual components and subsequently melt mixing, either directly in the extruder used to make the finished article or pre-mixing in a separate extruder. Dry blends of the compositions can also be directly injection molded without pre-melt mixing.

When softened or melted by the application of heat, the composition of the thermosetting monomers of the present disclosure and the thermoplastic resin can be formed or molded using conventional techniques such as compression molding, injection molding, gas assisted injection molding, calendaring, vacuum forming, thermoforming, extrusion and/or blow molding, alone or in combination. The composition of the thermosetting monomers of the present disclosure and the thermoplastic resin may also be formed, spun, or drawn into films, fibers, multi-layer laminates or extruded sheets, or can be compounded with one or more organic or inorganic substances.

Embodiments of the present disclosure also provide for a composition that includes the thermosetting monomer of the present disclosure and at least one of a polyurethane, a polyisocyanate, a benzoxazine ring-containing compound, an unsaturated resin system containing double or triple bonds, and combinations thereof.

The compositions of the present disclosure described above may also optionally make use of at least one catalyst. Examples of suitable curing catalysts include amines, dicyandiamides, substituted guanidines, phenolics, amino, benzoxazines, anhydrides, amido amines, polyamides, phosphines, ammonium, phosphonium, arsonium, sulfonium moieties or mixtures thereof.

Because of their unique combination of properties, the thermosetting monomer and/or compositions that include the thermosetting monomer may be useful in the preparation of various articles of manufacture. Thus, the disclosure also includes prepregs of the above composition as well as shaped articles, reinforced compositions, laminates, electrical laminates, coatings, molded articles, adhesives, composite products as hereinafter described from cured or partially cured thermosetting monomer or compositions that include the thermosetting monomer of the disclosure. In addition, the compositions of the disclosure can be used for various purposes in the form of a dried powder, pellets, a homogeneous mass, impregnated products or/or compounds.

A variety of additional additives may be added to the composition of the present disclosure. Examples of these additional additives include fibrous reinforcement, fillers, pigments, dyestuffs, thickening agents, wetting agents, lubricants, flame-retardants and the like. Suitable fibrous and/or particulate reinforcing materials include silica, alumina trihydrate, aluminum oxide, aluminum hydroxide oxide, metal oxides, nano tubes, glass fibers, quartz fibers, carbon fibers, boron fibers, Kevlar fibers and Teflon fibers, among others. A size range for the fibrous and/or particulate reinforcing materials can include 0.5 nm to 100 µm. For the various embodiments, the fibrous reinforcing materials can come in the form of a mat, cloth or continuous fibers.

The fibrous or reinforcing material is present in the composition in an amount effective to impart increased strength to the composition for the intended purpose, generally from 10 to 70 wt%, usually from 30 to 65 wt%, based on the weight of the total composition. The laminates of the disclosure can optionally include one or more layers of a different material and in electrical laminates this can include one or more layers of a conductive material such as copper or the like. When the resin composition of this disclosure is used for producing molded articles, laminated articles or bonded structures, the curing is desirably effected under pressure.

In a partially cured state, the fibrous reinforcement impregnated with the composition of the present disclosure can be subjected to a relatively mild heat treatment ("B-staged ") to form a "prepreg." The prepreg can then subjected to elevated temperature and pressure so as to more completely cure the composition to a hard, inflexible state. A plurality of prepregs can be layered and cured to form a laminate having utility in circuit boards.

Embodiments of the compositions may also include at least one of a synergist to help improve the flame extinguishing ability of the cured composition. Examples of such synergists include, but are not limited to, magnesium hydroxide, zinc borate, metallocenes and combinations thereof. In addition, embodiments of the compositions may also include adhesion promoters, such as modified organosilanes (epoxidized, methacryl, amino), acytlacetonates, sulfur containing molecules and combinations thereof. Other additives can include, but are not limited to, wetting and dispersing aids such as modified organosilanes, Byk® 900 series and W 9010 (Byk-Chemie GmbH), modified fluorocarbons and combinations thereof; air release additives such as Byk® A530, Byk® A525, Byk® A555, and Byk® A 560 (Byk-Chemie GmbH); surface modifiers such as slip and gloss additives; mold release agents such as waxes; and other functional additives or prereacted products to improve polymer properties such as isocyanates, isocyanurates, cyanate esters, allyl containing molecules or other ethylenically unsaturated compounds, acrylates and combinations thereof.

### Process for Producing the Composition

In an embodiment, a process for the manufacture of the varnish comprises the following steps:
1) The tetraphenolic epoxy resin is added to an appropriate vessel equipped with a mechanical stirrer, a heat source, and a nitrogen inlet. The resin is heated to 100 to 160 °C to melt the resin. The maleimide(s) are added while stirring to dissolve the maleimide. The temperature of the blend is maintained between 100 to 160 ° for 15 minutes to 6 hours. Once the mixture is homogenous, the heat source is removed and solvent is added dropwise to the vessel to dilute the epoxy - maleimide blend.
2) The solution blend from (1) above can then be blended with other ingredients such as the cyanate ester, additives, catalysts, and optional ingredients via mechanical stirring.

### Curable Composition

In an embodiment, the viscosity of the curable composition is low enough to flow and sufficiently wet glass bundles.

Typical reactivities for a laminate varnish based on treater conditions are in the range of from about 200 to about 300 seconds.

### Process for Curing the Composition

Curing of the compositions disclosed herein may require a temperature of at least about 30°C, up to about 250°C, for periods of minutes up to hours, depending on the epoxy resin, hardener, and catalyst, if used. In other embodiments, curing can occur at a temperature of at least 100°C, for periods of minutes up to hours. Post-treatments may be used as well, such post-treatments ordinarily being at temperatures between about 100°C and 250°C.

In some embodiments, curing can be staged to prevent large exothermic reactions. Staging, for example, includes curing for a period of time at a temperature followed by curing for a period of time at a higher temperature. Staged curing may include two or more curing stages, and may commence at temperatures below about 180°C in some embodiments, and below about 150°C in other embodiments.

In some embodiments, curing temperatures can range from a lower limit of 30°C, 40°C, 50°C, 60°C, 70°C, 80°C, 90°C, 100°C, 110°C, 120°C, 130°C, 140°C, 150°C, 160°C, 170°C, or 180°C to an upper limit of 250°C, 240°C, 230°C, 220°C, 210°C, 200°C, 190°C, 180°C, 170°C, 160°C, where the range may be from any lower limit to any upper limit.

For the various embodiments, a resin sheet can be formed from the thermosetting monomer and/or compositions of the present disclosure. In one embodiment, a plurality of sheets can be bonded together to form a laminated board, where the sheets comprise at least one of the resin sheet. The thermosetting monomer and/or compositions that include the thermosetting monomer can also be used to form a resin clad metal foil. For example, a metal foil, such as a copper foil, can be coated with the thermosetting monomer and/or compositions that include the thermosetting monomer of the present disclosure. The various embodiments also include a multi layer board that can be prepared by coating a laminated substrate with the thermosetting monomer and/or compositions of the present disclosure.

The thermosetting monomers of this disclosure comprise one or more components which can each be used in any desired form such as solid, solution or dispersion. These components are mixed in solvent or in the absence of a solvent to form the compositions of this disclosure. For example, the mixing procedure comprises mixing solutions of the thermosetting monomers and one or more of the formulation components or either separately or together in a suitable inert organic solvent, such as for example, ketones such as methyl ethyl ketone, chlorinated hydrocarbons such as methylene chloride, ethers and the like, and homogenizing the resulting mixed solution at room temperature or at an elevated temperature below the boiling point of the solvents to form a composition in the form of a solution. When homogenizing these solutions at room temperature or at an elevated temperature, some reactions may take place between the constituent elements. So long as the resins components are maintained in the state of solution without gelation, such reactions do not particularly affect the operability of the resulting composition in, for example, a bonding, coating, laminating or molding operation.

For the various embodiments, the thermosetting monomer and/or compositions of the present disclosure can applied to a substrate as a coating or adhesive layer. Alternatively, the thermosetting monomer and/or compositions of the present disclosure can be molded or laminated in the form of powder, pellet or as impregnated in a substrate such as a fibrous reinforcement. The thermosetting monomer and/or compositions of the present disclosure can then be cured by the application of heat.

The heat necessary to provide the proper curing conditions can depend on the proportion of components constituting the composition and the nature of the components employed. In general, the composition of this disclosure may be cured by heating it at a temperature within the range of 0 °C to 300 °C, preferably 100 °C to 250 °C, although differing according to the presence of a catalyst or curing agent or its amount, or the types of the components in the composition. The time required for heating can be 30 seconds to 10 hours, where the exact time will differ according to whether the resin composition is used as a thin coating or as molded articles of relatively large thickness or as laminates or as matrix resins for fiber reinforced composites, particularly for electrical and electronic applications, e.g., when applied to an electrically nonconductive material and subsequently curing the composition.

In some embodiments, composites can be formed by curing the compositions disclosed herein. In other embodiments, composites may be formed by applying a curable epoxy resin composition to a substrate or a reinforcing material, such as by impregnating or coating the substrate or reinforcing material to form a prepreg, and curing the prepreg under pressure to form the electrical laminate composition.

After the composition has been produced, as described above, it can be disposed on, in, or between the above described substrates, before, during, or after cure of an electrical laminate composition. For example, a composite may be formed by coating a substrate with a curable composition. Coating may be performed by various procedures, including spray coating, curtain flow coating, coating with a roll coater or a gravure coater, brush coating, and dipping or immersion coating.

In various embodiments, the substrate can be monolayer or multi-layer. For example, the substrate may be a composite of two alloys, a multi-layered polymeric article, and a metal-coated polymer, among others, for example. In other various embodiments, one or more layers of the curable composition may be disposed on a substrate. Other multi-layer composites, formed by various combinations of substrate layers and electrical laminate composition layers are also envisaged herein.

In some embodiments, the heating of the composition can be localized, such as to avoid overheating of a temperature-sensitive substrate, for example. In other embodiments, the heating may include heating the substrate and the composition.

### Cured Product Properties

Formulations prepared and cured according to the present invention exhibit significantly higher glass transition temperatures than other polyphenolic resins including phenol novolac and oxaxolidinone modified resins.

### END USE APPLICATIONS

The curable compositions disclosed herein may be useful in composites containing high strength filaments or fibers such as carbon (graphite), glass, boron, and the like. Composites can contain from about 30% to about 70%, in some embodiments, and from 40% to 70% in other embodiments, of these fibers based on the total volume of the composite.

Fiber reinforced composites, for example, can be formed by hot melt prepregging. The prepregging method is characterized by impregnating bands or fabrics of continuous fiber with a thermosetting composition as described herein in molten form to yield a prepreg, which is laid up and cured to provide a composite of fiber and epoxy resin.

Other processing techniques can be used to form electrical laminate composites containing the compositions disclosed herein. For example, filament winding, solvent prepregging, and pultrusion are typical processing techniques in which the curable composition may be used. Moreover, fibers in the form of bundles can be coated with the curable composition, laid up as by filament winding, and cured to form a composite.

The curable compositions and composites described herein may be useful as adhesives, structural and electrical laminates, coatings, marine coatings, composites, powder coatings, adhesives, castings, structures for the aerospace industry, and as circuit boards and the like for the electronics industry.

In some embodiments, the curable compositions and resulting thermoset resins may be used in composites, castings, coatings, adhesives, or sealants that may be disposed on, in, or between various substrates. In other embodiments, the curable compositions may be applied to a substrate to obtain an epoxy based prepreg. As used herein, the substrates include, for example, glass cloth, a glass fiber, glass paper, paper, and similar substrates of polyethylene and polypropylene. The obtained prepreg can be cut into a desired size. An electrical conductive layer can be formed on the laminate / prepreg with an electrical conductive material. As used herein, suitable electrical conductive materials include electrical conductive metals such as copper, gold, silver, platinum and aluminum. Such electrical laminates may be used, for example, as multi-layer printed circuit boards for electrical or electronics equipment. Laminates made from the maleimide-triazine-epoxy polymer blends are especially useful for the production of HDI (high density interconnect) boards. Examples of HDI boards include those used in cell phones or those used for Interconnect (IC) substrates.

### EXAMPLES

The following examples and comparative examples further illustrate the present

### Analytical methods

The glass transition temperature (Tg) was measured by DSC using a TA Instruments Model Q2000 DSC. The method used was IPC TM-650 2.4.25

The thermal decomposition (Td) is the temperature at which 5 wt % of the cured laminate is lost to decomposition products as measured at a ramp rate of 10°C/minute Td by TGA (TA Instruments Model Q5000 TGA) following the IPC method IPC TM-650 2.3.40.

### Components

DEN™ 438 is a is a multifunctional epoxy novolac with an epoxy equivalent weight of 180 sold by The Dow Chemical Company.
DER™ 6508 is an oxazolidone modified solid epoxy resin.
DOP-BN is the reaction product of a butylated resole and DOP.
Primaset® BA-230s is a prepolymer bisphenol A dicyanate.

### Solutions

### Resin Solution 1

To a 50 mL wide mouth glass jar was added 20.1 grams of DEN™ 438 and 9.9 grams of 2-butanone. The jar was placed on a shaker on low speed for 1 hour at room temperature.

### Resin Solution 2

To a 50 mL wide mouth glass jar was added 20.1 grams of DER™ 6508 and 9.9 grams of 2-butanone. The jar was placed on a shaker on low speed for 1 hour at room temperature.

### Resin Solution 3

To a 50 mL wide mouth glass jar was added 20.1 grams of the tetraglycidylether of cyclohexanedimethyltetraphenol and 9.9 grams of 2-butanone. The jar was placed on a shaker on low speed for 1 hour at room temperature.

### Maleimide Solution

To a 50 mL wide mouth glass jar was added 15 grams of BMI-2300, a polyphenylmaleimide, and 15 grams of 2-butanone. The jar was placed on a shaker on low speed for 1 hour at room temperature.

### Flame Retardant Solution

To a 50 mL wide mouth glass jar was added 16.5 grams of DOP-BN and 13.5 grams of 2-butanone. The jar was placed on a shaker on low speed for 1 hour at room temperature.

### Catalyst Solution

To a 30 mL scintillation vial was added 0.5 grams of zinc hexanoate and 9.5 grams of 2-butanone. The jar was placed on a shaker on low speed for 1 hour at room temperature.

### Comparative Examples

### Comparative Example 1

To a 30 mL scintillation vial was added 0.48 grams of Primaset® BA-230s, 0.36 grams of the Maleimide Solution, 1.63 grams of the flame retardant solution, and 4.54 grams of Resin Solution 2. The vial was placed on a shaker for 30 minutes.

### Comparative Example 2

To a 30 mL scintillation vial was added 0.67 grams of Primaset® BA-230s, 0.71 grams of the Maleimide Solution, 1.63 grams of the flame retardant solution, and 4.22 grams of Resin Solution 1. The vial was placed on a shaker for 30 minutes.

### Comparative Example 3

To a 30 mL scintillation vial was added 0.67 grams of Primaset® BA-230s, 0.54 grams of the Maleimide Solution, 1.63 grams of the flame retardant solution, and 4.17 grams of Resin Solution 1. The vial was placed on a shaker for 30 minutes.

### Comparative Example 4

To a 30 mL scintillation vial was added 0.67 grams of Primaset® BA-230s, 0.54 grams of the Maleimide Solution, 1.63 grams of the flame retardant solution, and 4.17 grams of Resin Solution 2. The vial was placed on a shaker for 30 minutes.

### Comparative Example 5

To a 30 mL scintillation vial was added 0.71 grams of Primaset® BA-230s, 0.71 grams of the Maleimide Solution, 1.63 grams of the flame retardant solution, and 3.97 grams of Resin Solution 2. The vial was placed on a shaker for 30 minutes.

### Comparative Example 6

To a 30 mL scintillation vial was added 0.96 grams of Primaset® BA-230s, 0.36 grams of the Maleimide Solution, 1.63 grams of the flame retardant solution, and 4.04 grams of Resin Solution 1. The vial was placed on a shaker for 30 minutes.

### Inventive Examples

### Example 1

To a 30 mL scintillation vial was added 0.48 grams of Primaset® BA-230s, 0.71 grams of the Maleimide Solution, 1.63 grams of the flame retardant solution, and 4.22 grams of Resin Solution 3. The vial was placed on a shaker for 30 minutes.

### Example 2

To a 30 mL scintillation vial was added 0.67 grams of Primaset® BA-230s, 0.54 grams of the Maleimide Solution, 1.63 grams of the flame retardant solution, and 4.17 grams of Resin Solution 3. The vial was placed on a shaker for 30 minutes.

### Example 3

To a 30 mL scintillation vial was added 0.96 grams of Primaset® BA-230s, 0.36 grams of the Maleimide Solution, 1.63 grams of the flame retardant solution, and 4.04 grams of Resin Solution 3. The vial was placed on a shaker for 30 minutes.

To each Comparative Example and Example was added enough Catalyst Solution to result in 400 ppm of zinc hexanoate in the formulation. The samples were placed back on the shaker on low speed for 30 minutes at room temperature.

Aliquots of each Comparative Example and Example were placed on a 171°C hot plate and agitated with a wooden tongue depressor until gellation was observed. The gelled samples were then post cured at 220°C for 90 minutes.

Each cured sample was analyzed via differential scanning calorimetry (DSC) and thermogravimetry analysis (TGA) to determine the glass transition temperature (Tg) and the 5% decomposition temperature (Td). The data are show in Table I, below.

**Table I**

| Sample | Tg (°C) | Td (°C) |
|---|---|---|
| Comparative Example 1 | 150.1 | 361.8 |
| Comparative Example 2 | 84.6 | 344.0 |
| Comparative Example 3 | 121.5 | 356.7 |
| Comparative Example 4 | 157.4 | 361.1 |
| Comparative Example 5 | 160.8 | 357.9 |
| Comparative Example 6 | 152.6 | 362.8 |
| Example 1 | 189.8 | 368.8 |
| Example 2 | 215.7 | 367.7 |
| Example 3 | 232.2 | 369.1 |

The data indicate a significant increase in Tg for the samples containing the tetraglycidyl ether of cyclohexanedimethyltetraphenol compared with both the standard epoxidized novolac (DEN™ 438) and the oxazolidinone containing resin (DER™ 6508).

## Claims

1. A composition comprising:
a) tetraphenolic epoxy resin comprising the tetraglycidyl ether of cyclohexanedimethyltetraphenol or the tetraglycidylether of dicyclopentadienedimethyltetraphenol;
b) a maleimide comprising toluenebismaleimide, phenylmaleimide, 4,4'-bismaleimidodiphenylmethane or combinations thereof; and
c) 10 to 50 wt.% of a triazine and/or a cyanate ester, in terms of the weight of cyanate monomer vs. the weight of the other organic components excluding solvent, wherein said triazine and/or cyanate ester comprises triazine cyanate ester.

2. A composition in accordance with claim 1 wherein said maleimide is present in an amount in the range of from about 0.5 weight percent to about 75 weight percent, based on the total weight of the composition.

3. A composition in accordance with claim 1 wherein said tetraphenolic epoxy resin is present in an amount in the range of from about 5 weight percent to about 95 weight percent, based on the total weight of the composition

4. A process for preparing the composition of claim 1 comprising admixing said tetraphenolic epoxy resin, said maleimide, and said triazine and/or cyanate ester.

5. A varnish produced from the composition of claim 1.

6. A prepreg prepared from the varnish of claim 5.

7. An electrical laminate prepared from the varnish of claim 5

8. A printed circuit board prepared from the varnish of claim 5.

9. A coating prepared from the varnish of claim 5.

10. A composite prepared from the varnish of claim 5.

11. A casting prepared from the varnish of claim 5.

12. An adhesive prepared from the varnish of claim 5.

## Patentansprüche

1. Eine Zusammensetzung, die Folgendes beinhaltet:
a) Tetraphenol-Epoxidharz, beinhaltend den Tetraglycidylether von Cyclohexandimethyltetraphenol oder den Tetraglycidylether von Dicyclopentadiendimethyltetraphenol;
b) ein Maleimid, beinhaltend Toluenbismaleimid, Phenylmaleimid, 4,4'-Bismaleimidodiphenylmethan oder Kombinationen davon; und
c) zu 10 bis 50 Gew.-% ein Triazin- und/oder ein Cyanatester, in Bezug auf das Gewicht von Cyanatmonomer im Vergleich zu dem Gewicht der anderen organischen Komponenten außer Lösungsmittel, wobei der Triazin- und/oder Cyanatester Triazin-Cyanatester beinhaltet.

2. Zusammensetzung gemäß Anspruch 1, wobei das Maleimid in einer Menge im Bereich von etwa 0,5 Gewichtsprozent bis etwa 75 Gewichtsprozent, bezogen auf das Gesamtgewicht der Zusammensetzung, vorhanden ist.

3. Zusammensetzung gemäß Anspruch 1, wobei das Tetraphenol-Epoxidharz in einer Menge im Bereich von etwa 5 Gewichtsprozent bis etwa 95 Gewichtsprozent, bezogen auf das Gesamtgewicht der Zusammensetzung, vorhanden ist.

4. Ein Verfahren zur Herstellung der Zusammensetzung gemäß Anspruch 1, beinhaltend das Mischen des Tetraphenol-Epoxidharzes, des Maleimids und des Triazin- und/oder Cyanatesters.

5. Ein Lack, erzeugt aus der Zusammensetzung gemäß Anspruch 1.

6. Ein Prepreg, hergestellt aus dem Lack gemäß Anspruch 5.

7. Ein Elektrolaminat, hergestellt aus dem Lack gemäß Anspruch 5.

8. Eine Leiterplatte, hergestellt aus dem Lack gemäß Anspruch 5.

9. Eine Beschichtung, hergestellt aus dem Lack gemäß Anspruch 5.

10. Ein Verbundstoff, hergestellt aus dem Lack gemäß Anspruch 5.

11. Ein Guss, hergestellt aus dem Lack gemäß Anspruch 5.

12. Ein Klebstoff, hergestellt aus dem Lack gemäß Anspruch 5.

## Revendications

1. Une composition comprenant :
a) une résine époxy tétraphénolique comprenant l'éther tétraglycidylique de cyclohexanediméthyltétraphénol ou le tétraglycidyléther de dicylopentadiènediméthyltétraphénol ;
b) un maléimide comprenant du toluènebismaléimide, du phénylmaléimide, du 4,4'-bismaléimidodiphénylméthane ou des combinaisons de ceux-ci ; et
c) de 10 à 50 % en poids d'une triazine et/ou d'un ester cyanate, en fonction du poids de monomère cyanate par rapport au poids des autres composants organiques, solvant non compris, dans laquelle la triazine et/ou l'ester cyanate comprend de l'ester cyanate de triazine.

2. Une composition conformément à la revendication 1 dans laquelle ledit maléimide est présent dans une quantité comprise dans la gamme allant d'environ 0,5 pour cent en poids à environ 75 pour cent en poids, rapporté au poids total de la composition.

3. Une composition conformément à la revendication 1 dans laquelle ladite résine époxy tétraphénolique est présente dans une quantité comprise dans la gamme allant d'environ 5 pour cent en poids à environ 95 pour cent en poids, rapporté au poids total de la composition.

4. Un procédé pour préparer la composition de la revendication 1 comprenant le fait de mélanger ensemble ladite résine époxy tétraphénolique, ledit maléimide, et ladite triazine et/ou ledit ester cyanate.

5. Un vernis produit à partir de la composition de la revendication 1.

6. Un préimprégné préparé à partir du vernis de la revendication 5.

7. Un stratifié électrique préparé à partir du vernis de la revendication 5.

8. Une carte de circuit imprimé préparée à partir du vernis de la revendication 5.

9. Un revêtement préparé à partir du vernis de la revendication 5.

10. Un composite préparé à partir du vernis de la revendication 5.

11. Une coulée préparée à partir du vernis de la revendication 5.

12. Un adhésif préparé à partir du vernis de la revendication 5.
